# EUROPÄISCHE PATENTSCHRIFT

(11) **EP 2 934 987 B1**
(45) Veröffentlichungstag und Bekanntmachung des Hinweises auf die Patenterteilung: **09.08.2017**
(21) Anmeldenummer: 13808011.4
(22) Anmeldetag: 17.12.2013
(51) Int. Cl.: B62D 6/10, B62D 15/02

(54) **SENSORVORRICHTUNG MIT EINER DREHMOMENTSENSOREINRICHTUNG UND EINER LENKWINKELSENSOREINRICHTUNG FÜR EINE LENKWELLE, WELCHE EIN LENKRADSEITIGES EINGANGSWELLENTEIL UND EIN AUSGANGSWELLENTEIL AUFWEIST, LENKWELLENVORRICHTUNG FÜR EIN KRAFTFAHRZEUG, KRAFTFAHRZEUG UND VERFAHREN ZUM HERSTELLEN EINER LENKWELLENVORRICHTUNG**
SENSOR ARRANGEMENT WITH A TORQUE SENSOR DEVICE AND A STEERING ANGLE SENSOR DEVICE FOR A STEERING SHAFT WHICH HAS AN INPUT SHAFT PART ON THE STEERING-WHEEL SIDE AND AN OUTPUT SHAFT PART, STEERING SHAFT ARRANGEMENT FOR A MOTOR VEHICLE, MOTOR VEHICLE AND METHOD FOR PRODUCING A STEERING SHAFT ARRANGEMENT
SYSTÈME DE CAPTEURS COMPORTANT UN DISPOSITIF CAPTEUR DE COUPLE ET UN DISPOSITIF CAPTEUR D'ANGLE DE DIRECTION POUR UN ARBRE DE DIRECTION, LEQUEL PRÉSENTE UNE PARTIE D'ARBRE D'ENTRÉE, CÔTÉ VOLANT, ET UNE PARTIE D'ARBRE DE SORTIE, SYSTÈME D'ARBRE DE DIRECTION POUR UN VÉHICULE AUTOMOBILE, VÉHICULE AUTOMOBILE ET PROCÉDÉ DE FABRICATION D'UN SYSTÈME D'ARBRE DE DIRECTION

(30) Priorität: 21.12.2012 DE 102012025280
(43) Veröffentlichungstag der Anmeldung: 28.10.2015
(73) Patentinhaber: Valeo Schalter und Sensoren GmbH, 74321 Bietigheim-Bissingen (DE)
(72) Erfinder: SCHOEPE, Roman, 75433 Maulbronn (DE); RACHUI, Dirk, 74321 Bietigheim-Bissingen (DE); JEREMS, Frank, 74369 Loechgau (DE); THOM, Jens, 71034 Boeblingen (DE)
(86) Internationale Anmeldenummer: PCT/EP2013/076921
(87) Internationale Veröffentlichungsnummer: WO 2014/095878

(56) Entgegenhaltungen:
- DE-A1-102010 033 769
- US-A1- 2010 194 385
- US-A1- 2012 152 034

## Beschreibung

Die Erfindung betrifft eine Sensorvorrichtung für eine ein lenkradseitiges Lenkradwellenteil und ein Ausgangswellenteil aufweisende Lenkwelle eines Kraftfahrzeugs, mit einer Drehmomentsensoreinrichtung, die einen Magneten und einen magnetischen Stator aufweist. Der Magnet kann an einem der Wellenteile befestigt werden, und der magnetische Stator ist an dem anderen Wellenteil befestigbar und zum Leiten von magnetischem Fluss von dem Magneten hin zu einem Magnetsensor ausgebildet. Die Sensorvorrichtung umfasst auch eine Lenkwinkelsensoreinrichtung zur Erfassung eines Lenkwinkels der Lenkwelle, wobei die Lenkwinkelsensoreinrichtung einen Rotor und eine Erfassungseinrichtung zur Erfassung einer Drehbewegung des Rotors aufweist. Die Erfindung betrifft außerdem eine Lenkwellenvorrichtung mit einer solchen Sensorvorrichtung, ein Kraftfahrzeug sowie ein Verfahren zum Herstellen einer Lenkwellenvorrichtung für ein Kraftfahrzeug.

Drehmomentsensoreinrichtungen zur Erfassung eines auf eine Lenkwelle eines Kraftfahrzeugs aufgebrachten Drehmoments sind bereits Stand der Technik. Solche Drehmomentsensoreinrichtungen können beispielsweise bei elektrischen Lenksystemen eingesetzt werden. Eine Drehmomentsensoreinrichtung ist zum Beispiel aus dem Dokument US 2004/0194560 A1 sowie aus der Druckschrift DE 102 40 049 A1 bekannt. Die Drehmomentsensoreinrichtung ist dabei an zwei sich in axialer Richtung gegenüberliegenden Wellenteilen bzw. Teilwellen der Lenkwelle angebracht, welche über einen Torsionsstab miteinander verbunden sind. An dem ersten Wellenteil ist ein Magnet - etwa ein Ringmagnet - angeordnet, während auf dem anderen Wellenteil ein Halter mit einem magnetischen Stator angebracht ist, welcher dem Dauermagneten in radialer Richtung über einen kleinen Luftspalt gegenüberliegt. Über den Stator - welcher üblicherweise aus zwei separaten Statorteilen besteht - wird der magnetische Fluss des Magneten hin zu einem ersten und einem zweiten Flussleiter geleitet, welche dann den magnetischen Fluss an einen Magnetsensor - beispielsweise einen Hall-Sensor - abgeben. Der Magnetsensor befindet sich dabei zwischen den beiden Flussleitern, wie dies beispielsweise in den Fig. 7 und 8 des Dokuments US 2004/0194560 A1 gut erkennbar ist.

Eine solche Drehmomentsensoreinrichtung ist außerdem aus dem Dokument DE 10 2007 043 502 A1 bekannt.
Außerdem sind aus dem Stand der Technik auch Lenkwinkelsensoreinrichtungen bekannt, welche zur Erfassung des aktuellen Lenkwinkels der Lenkwelle dienen. Eine solche Einrichtung ist zum Beispiel aus dem Dokument DE 10 2008 011 448 A1 als bekannt zu entnehmen. Eine Drehbewegung der Lenkwelle wird hier über ein Getriebe auf ein kleineres Zahnrad übertragen, welches einen Magneten trägt. Die Rotation des kleineren Zahnrades wird dann mithilfe eines Magnetsensors erfasst.
Zum Stand der Technik gehören auch solche Vorrichtungen, bei denen die Drehmomentsensoreinrichtung einerseits sowie die Lenkwinkelsensoreinrichtung andererseits integral als eine gemeinsame Baueinheit ausgebildet sind. Eine solche Vorrichtung mit einem Drehmomentsensor und einem Drehwinkelsensor ist beispielsweise aus dem Dokument DE 10 2010 033 769 A1 bekannt.
Das Dokument US 2012/152034 A1 beschreibt die Merkmale des Oberbegriffs der unabhängigen Ansprüche 1 beziehungsweise 7. Das Interesse gilt vorliegend der genannten Sensorvorrichtung, bei welcher die Drehmomentsensoreinrichtung mit der Lenkwinkelsensoreinrichtung kombiniert wird. Eine solche Sensorvorrichtung wird typischerweise an einer Schnittstelle zwischen dem lenkradseitigen Eingangswellenteil einerseits und dem Ausgangswellenteil andererseits eingesetzt, wobei das lenkradseitige Eingangswellenteil dem Lenkrad zugeordnet ist, während das Ausgangswellenteil der Lenkstange zugeordnet ist. Es wurde erkannt, dass im Stand der Technik die Bestimmung des Lenkwinkels mittels der Lenkwinkelsensoreinrichtung bei derartigen integralen Sensorvorrichtungen relativ aufwändig ist.
Es ist Aufgabe der Erfindung, eine Lösung aufzuzeigen, wie bei einer Sensorvorrichtung der eingangs genannten Gattung die Bestimmung des aktuellen Lenkwinkels im Vergleich zum Stand der Technik vereinfacht werden kann und somit ohne viel Aufwand ermöglicht werden kann.
Diese Aufgabe wird erfindungsgemäß durch eine Sensorvorrichtung, durch eine Lenkwellenvorrichtung, durch ein Kraftfahrzeug sowie durch ein Verfahren mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Eine erfindungsgemäße Sensorvorrichtung ist für eine Lenkwelle eines Kraftfahrzeugs konzipiert, welche ein lenkradseitiges Eingangswellenteil und ein Ausgangswellenteil aufweist, wobei die beiden Wellenteile vorzugsweise über einen Torsionsstab miteinander verbunden sind. Die Sensorvorrichtung umfasst eine Drehmomentsensoreinrichtung zur Erfassung eines auf die Lenkwelle aufgebrachten Drehmoments sowie eine Lenkwinkelsensoreinrichtung zur Erfassung eines Lenkwinkels der Lenkwelle. Die Drehmomentsensoreinrichtung umfasst einen Magneten, der an einem der Wellenteile befestigt wird, sowie einen magnetischen Stator, der an dem anderen Wellenteil befestigt wird und zum Leiten von magnetischem Fluss von dem Magneten hin zu einem Magnetsensor ausgebildet ist, optional über einen Flussleiter. Die Lenkwinkelsensoreinrichtung wiederum umfasst einen Rotor, der mit der Eingangswelle drehbar gekoppelt wird, sowie eine Erfassungseinrichtung zur Erfassung der Drehbewegung des Rotors, um den aktuellen Lenkwinkel zu bestimmen. Erfindungsgemäß ist vorgesehen, dass die Sensorvorrichtung so ausgebildet ist, dass der Rotor der Lenkwinkelsensoreinrichtung mit dem Eingangswellenteil drehbar gekoppelt bzw. koppelbar ist.

Die Erfindung basiert auf mehreren Erkenntnissen: Sie beruht zunächst auf der Erkenntnis, dass die Bestimmung des aktuellen Lenkwinkels anhand von Messdaten der Lenkwinkelsensoreinrichtung im Stand der Technik relativ aufwändig ist. Eine weitere Erkenntnis besteht darin, dass der Aufwand im Stand der Technik dadurch verursacht wird, dass der Rotor der Lenkwinkelsensoreinrichtung in der Regel mit dem Ausgangswellenteil der Lenksäule drehbar gekoppelt wird, d.h. hinter dem genannten Torsionsstab, so dass auch das Lenkwinkelsignal von dem Ausgangswellenteil abgegriffen wird. Der Aufwand besteht im Stand der Technik darin, dass der Verdrehwinkel des Torsionsstabs anhand von Messdaten der Drehmomentsensoreinrichtung ermittelt und von dem Lenkwinkelsignal subtrahiert werden muss. Dies ist einerseits rechentechnisch relativ aufwändig und erhöht außerdem die Rechenzeit, die zur Bestimmung des aktuellen Lenkwinkels benötigt wird. Die Erfindung baut ferner auf der Erkenntnis auf, dass die Nachteile des Standes der Technik dadurch umgangen werden können, dass die Sensorvorrichtung derart ausgebildet wird, dass der Rotor mit dem lenkradseitigen Eingangswellenteil drehbar gekoppelt werden kann. Somit liefert die Lenkwinkelsensoreinrichtung Messdaten, aus denen unmittelbar der aktuelle Lenkwinkel präzise bestimmt werden kann, ohne dass eine zusätzliche Auswertung des Drehmomentsignals erforderlich ist.

Im Stand der Technik wird der Magnet üblicherweise an dem Eingangswellenteil befestigt, während der magnetische Stator (etwa aus weichmagnetischem Material) an dem Ausgangswellenteil befestigt wird. In der Regel wird der Rotor mit dem magnetischen Stator bzw. mit einem Halter des Stators drehfest verbunden, so dass der Rotor über den Halter des Stators mit dem Ausgangswellenteil drehbar gekoppelt ist, was mit den oben genannten Nachteilen verbunden ist. Um den Aufbau der bereits vorhandenen Sensorvorrichtungen nicht in aufwändiger Weise umgestaltet zu müssen und die oben genannten Vorteile mit geringstem Aufwand erzielen zu können, wird in einer Ausführungsform der Erfindung vorgeschlagen, den Magneten weiterhin an dem Eingangswellenteil zu befestigen, jedoch den Rotor von dem magnetischen Stator zu trennen bzw. zu lösen. Erfindungsgemäßist der Rotor mit dem Magneten drehbar verbunden und somit über den Magneten mit dem Eingangswellenteil drehbar gekoppelt. Wie bereits ausgeführt, hat diese Ausführungsform den Vorteil, dass die Vorteile der Erfindung erzielt werden können, ohne dass die bereits vorhandenen Sensorvorrichtungen in aufwändiger Weise umgestaltet werden müssen.

Um die drehfeste Kopplung zwischen dem Magneten einerseits und dem Rotor andererseits auf technisch einfache Weise zu ermöglichen, kann eines der Elemente Rotor oder Magnet eine, beispielsweise radiale, Aussparung bzw. Einbuchtung aufweisen, während das andere Element ein Mitnehmerelement aufweisen kann, welches in die Aussparung eingreift und sich in die Aussparung hinein erstreckt.

Es erweist sich als vorteilhaft, wenn der Rotor einen ringförmigen Grundkörper aufweist, in welchem die Aussparung ausgebildet ist, während der Magnet das genannte Mitnehmerelement aufweist. Die Aussparung ist dabei vorzugsweise im inneren Durchmesser bzw. am Innenumfang des Rotors ausgebildet und weist somit die Form einer Nut auf, in welche das auf dem Magneten befindliche Mitnehmerelement bei der axialen Montage der Vorrichtung geführt wird. Hierzu können insbesondere Einführschrägen bereitgestellt werden, welche das Einführen des Mitnehmerelements bei der axialen Montage in die Nut vereinfachen. Die Aussparung und das Mitnehmerelement werden vorzugsweise so aufeinander abgestimmt, dass möglichst ein geringes Spiel zwischen den beiden Elementen vorhanden ist, um die Hysterese in dem Messsignal der Lenkwinkelsensoreinrichtung möglichst gering zu halten. Das Mitnehmerelement kann beispielsweise aus dem Magnetmaterial selbst oder alternativ aus einer Umspritzung ausgeformt werden, mit welcher der Magnet und eine Hülse (zur Verbindung mit dem Wellenteil) miteinander verbunden werden.

In einer Ausführungsform ist vorgesehen, dass die Erfassungseinrichtung zur Erfassung der Drehbewegung des Rotors ein Getriebe aufweist, mittels welchem die Drehbewegung des Rotors in eine Drehbewegung eines Magnetelements übertragbar ist, dessen Bewegung wiederum mittels eines Magnetdetektors (z.B. eines Hall-Sensors) erfasst werden kann. Das Getriebe und das Magnetelement sind dabei vorzugsweise in einem Gehäuse angeordnet, in welchem zusätzlich auch der Rotor drehbar gelagert ist. Der Rotor ist somit axial in dem Gehäuse drehbar gelagert, in welchem auch das Getriebe der Lenkwinkelsensoreinrichtung untergebracht ist. Durch diese Anordnung des Rotors direkt an dem Getriebe ergibt sich eine wesentlich kürzere Toleranzkette, was zur erheblichen Reduktion der Achsabstandstoleranzen führt, was sich wiederum einerseits bei der Fertigung der Lenkwinkelsensoreinrichtung und andererseits bei der Genauigkeit der Erfassung des Lenkwinkels als besonders vorteilhaft erweist.

Die Erfindung betrifft außerdem eine Lenkwellenvorrichtung für ein Kraftfahrzeug, mit einer Lenkwelle, welche ein lenkradseitiges Eingangswellenteil und ein Ausgangswellenteil aufweist, und mit einer erfindungsgemäßen Sensorvorrichtung.

Ein erfindungsgemäßes Kraftfahrzeug, insbesondere eine Personenkraftwagen, umfasst eine erfindungsgemäße Lenkwellenvorrichtung.

Ein erfindungsgemäßes Verfahren dient zum Herstellen einer Lenkwellenvorrichtung für ein Kraftfahrzeug durch Bereitstellen einer Lenkwelle mit einem lenkradseitigen Eingangswellenteil und einem Ausgangswellenteil, durch Bereitstellen einer Drehmomentsensoreinrichtung mit einem Magneten, der an einem der Wellenteile befestigt wird, und einem magnetischen Stator, der an dem anderen Wellenteil befestigt wird, und durch Bereitstellen einer Lenkwinkelsensoreinrichtung mit einem Rotor zur Erfassung eines Lenkwinkels der Lenkwelle, wobei der Rotor mit dem Eingangswellenteil drehbar gekoppelt wird.

Die mit Bezug auf die erfindungsgemäße Sensorvorrichtung vorgestellten bevorzugten Ausführungsformen und deren Vorteile gelten entsprechend für die erfindungsgemäße Lenkwellenvorrichtung, für das erfindungsgemäße Kraftfahrzeug sowie für das erfindungsgemäße Verfahren.

Weitere Merkmale der Erfindung ergeben sich aus den Ansprüchen, den Figuren und der Figurenbeschreibung.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer und perspektivischer Darstellung eine Sensorvorrichtung gemäß einer Ausführungsform der Erfindung; und
- Fig. 2: in schematischer und perspektivischer Darstellung die Sensorvorrichtung im zusammengebauten Zustand.

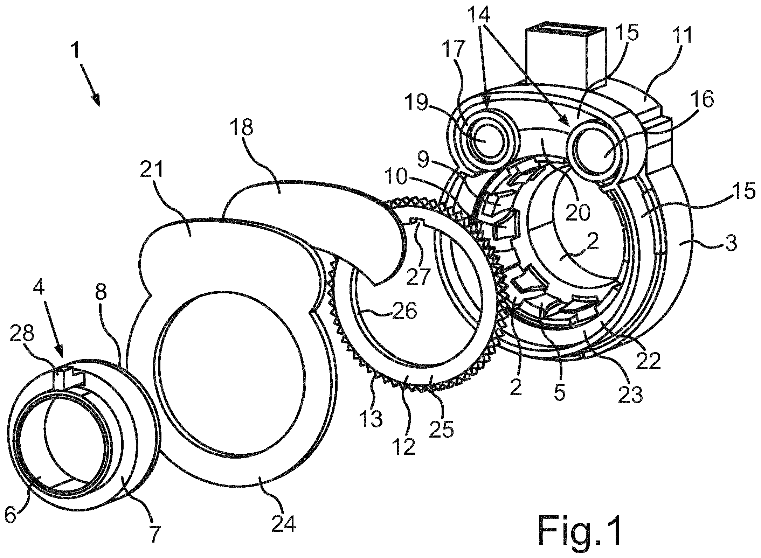

Das vorliegende Ausführungsbeispiel baut beispielsweise auf einer kombinierten Sensorvorrichtung auf, wie sie im Dokument DE 10 2010 033 769 A1 beschrieben ist. Eine in Fig. 1 dargestellte Sensorvorrichtung 1 ist für eine Lenkwelle eines Kraftfahrzeugs konzipiert, die ein lenkradseitiges Eingangswellenteil (Eingangswelle) und ein lenkstangenseitiges Ausgangswellenteil (Ausgangswelle) umfasst, wobei die beiden Wellenteile über ein Torsionselement miteinander verbunden sind. Die Sensorvorrichtung 1 ist eine integrierte Vorrichtung, welche sowohl eine Drehmomentsensoreinrichtung als auch eine Lenkwinkelsensoreinrichtung umfasst, welche in ein gemeinsames Bauteil integriert sind. Deshalb wird die Sensorvorrichtung 1 an der Schnittstelle zwischen dem Eingangswellenteil und dem Ausgangswellenteil eingesetzt.

Die Sensorvorrichtung 1 weist einen als Träger ausgebildeten Halter 2 auf, welcher im Ausführungsbeispiel mit dem Ausgangswellenteil verbunden wird. Der Halter 2 ist beispielsweise aus Kunststoff gebildet und innerhalb eines Gleitstücks 3 an seinem inneren Umfang drehbar gelagert. Das Gleitstück 3 wird dabei im Kraftfahrzeug ortsfest montiert, so dass sich der Halter 2 bezüglich des Gleitstücks 3 drehen kann. Wie bereits ausgeführt, wird der Halter 2 dabei an dem Ausgangswellenteil drehfest montiert.

An dem Eingangswellenteil der Lenkwelle hingegen wird ein Magnet 4 (Permanentmagnet) drehfest befestigt und so angeordnet, dass der Magnet 4 relativ zu einem magnetischen Stator 5 gedreht werden kann und sich der Magnet 4 außerdem in radialer Überlappung und in einem geringen radialen Abstand zum Stator 5 befindet. Der Magnet 4 ist insgesamt einstückig ausgebildet und weist eine innere Hülse 6 auf, über welche der Magnet 4 mit dem Eingangswellenteil verbunden wird. Der Magnet 4 weist des Weiteren ein Magnetmaterial 7 auf (den tatsächlichen Permanentmagneten), welches auf die Hülse 6 aufgesetzt und beispielsweise mit einer Umspritzung 8 befestigt ist.

Der magnetische Stator 5 ist z.B. aus einem weichmagnetischen Material gebildet. Der Stator 5 ist an dem Halter 2 befestigt und besteht üblicherweise aus zwei separaten Statorteilen, deren Zähne 9 bzw. 10 abwechselnd bzw. in Umfangsrichtung in abwechselnder Reihenfolge angeordnet sind. Die Zähne 9, 10 weisen in axialer Richtung, wobei die Zähne 9 einerseits und die Zähne 10 andererseits in entgegengesetzte Richtungen zeigen. Der magnetische Fluss wird dabei vom Magneten 4 über die Zähne 9, 10 und über den Stator 5 hin zu einem Flussleiter geleitet, der in einem Gehäuse 11 angeordnet ist und welcher in einem geringen Abstand zum Stator 5 angeordnet ist. Der Flussleiter leitet den magnetischen Fluss dann weiter an einen Magnetsensor, insbesondere einen Hall-Sensor, mittels welchem ein Signal bereitgestellt wird, welches abhängig von einer Verdrehung zwischen dem Stator 5 einerseits und dem Magneten 4 andererseits und somit abhängig von dem aufgebrachten Drehmoment ist.

Zur Drehmomentsensoreinrichtung gehören also der magnetische Stator 5, der Magnet 4, der Flussleiter und der genannte Magnetsensor.

Demgegenüber weist die Lenkwinkelsensoreinrichtung einen beispielsweise aus Kunststoff gebildeten Rotor 12 auf, welcher außenumfänglich mit einer Zahnstruktur 13 ausgebildet ist. Der Rotor 12 wird mit dem Magneten 4 drehbar gekoppelt und dreht sich somit zusammen mit dem lenkradseitigen Eingangswellenteil. Zur Erfassung der Bewegung des Rotors 12 ist ein Getriebe 14 vorgesehen, welches in einem axial stirnseitig an dem Gleitstück 3 angeordneten Gehäuse 15 angeordnet ist. Die Zahnstruktur 13 des Rotors 12 steht in Eingriff mit einem ersten Zahnrad 16 sowie einem zweiten Zahnrad 17. In das Zahnrad 16 ist ein nicht dargestelltes Magnetelement integriert, das in axialer Überlappung mit einem Magnetdetektor angeordnet ist, der an einer Leiterplatte 18 angeordnet ist. Innerhalb des zweiten Zahnrads 17 ist ein drittes Zahnrad 19 angeordnet, ein sogenannter Ritzel. Das dritte Zahnrad 19 enthält wiederum einen Permanentmagneten. Die Zahnräder 16, 17, 19 werden in einer Aufnahme 20 des Gehäuses 15 untergebracht und darin drehbar gelagert. Die Aufnahme 20 liegt dabei radial versetzt zum Halter 2 bzw. zum Rotor 12. In der Aufnahme 20 ist eine nicht dargestellte Innenverzahnung vorhanden, an der das Zahnrad 19 entlang einer Zykloide abrollen kann. Die Bohrung des Zahnrads 17 ist hierzu exzentrisch ausgebildet. Die Leiterplatte 18 und ein Deckel 21 sind gegenstückig zur Aufnahme 20 ausgebildet und schließen das Getriebe 14 von der axialen Stirnseite her ein.

In typischen Fahrzeuglenkungen wird ein Bereich von 5 bis 7 vollen Umdrehungen der Lenkwelle eindeutig erfasst. Um auch bei mehr als einer vollen Umdrehung der Lenkwelle den absoluten Drehwinkel eindeutig zu bestimmen, werden zwei Baugruppen eingesetzt. Die eine Baugruppe bildet einen Umdrehungssensor (Revolution Sensor) und umfasst die Zahnräder 17, 19. Es wird beispielsweise ein Übersetzungsverhältnis von Rotor 12 zu Zahnrad 19 von 6:1 gewählt. Die andere Baugruppe dient der Feinbestimmung des Drehwinkels (Angle Sensor) und umfasst im Wesentlichen das Zahnrad 16 mit seinem Permanentmagneten. Für das Übersetzungsverhältnis von Rotor 12 zu Zahnrad 16 wird beispielsweise ein Wert von 1:3 gewählt. Aus den beiden mit den jeweiligen Magnetfelddetektoren gemessenen Zahnradwinkeln kann dann in bekannter Weise über das Nonius-Prinzip der Drehwinkel der Lenkwelle unmittelbar berechnet werden.

Es können auch alternative Methoden zur Bestimmung des absoluten Lenkwinkels verwendet werden, so dass die Erfindung nicht auf die dargestellte Methode beschränkt ist. Entscheidend ist lediglich, dass der Rotor 12 mit dem Eingangswellenteil drehfest gekoppelt wird, so dass der Lenkwinkel auf der Eingangsseite des Torsionsstabs erfasst wird.

Um die Anbindung des Rotors 12 an das Eingangswellenteil zu ermöglichen, wird der Rotor 12 - anders als im Stand der Technik - von dem Halter 2 gelöst und separat vom Halter 2 gelagert. Zur drehbaren Lagerung des Rotors 12 wird das Gehäuse 15 des Getriebes 14 genutzt. Dieses Gehäuse 15 weist eine vollumfänglich bzw. über den gesamten Umfang ausgebildete axiale Vertiefung 22 auf, welche an der axialen Stirnseite des Gehäuses 15 ausgebildet ist. Der Rotor 12 wird in Anlage mit einem axialen Boden 23 der Vertiefung 22 gebracht und somit in dem Gehäuse 15 drehbar gelagert. Der Deckel 21 weist dazu einen ringförmigen Deckelabschnitt 24 auf, mittels welchem der Rotor 12 innerhalb der Vertiefung 22 eingeschlossen wird. Der Rotor 12 steht dann in unmittelbarem Eingriff mit den Zahnrädern 16, 17, was Vorteile hinsichtlich der Achsabstandstoleranzen bedingt durch eine erheblich kürzere Toleranzkette bietet.

Der Rotor 12 wird über den Magneten 4 angetrieben. Mit anderen Worten wird der Magnet 4 direkt mit dem Eingangswellenteil verbunden, während der Rotor 12 mittelbar über den Magneten 4 mit dem Eingangswellenteil drehfest gekoppelt wird. Der Rotor 12 hat einen ringförmigen Grundkörper 25, der an seinem Außenumfang die Zahnstruktur 13 aufweist, wobei an einem Innenumfang 26 des Grundkörpers 25 eine radiale Aussparung 27 in Form einer radialen Nut ausgebildet ist. Diese Aussparung 27 ist zur Aufnahme eines korrespondierenden Mitnehmerelements 28 ausgebildet, welches an dem Magneten 4 angeordnet ist.

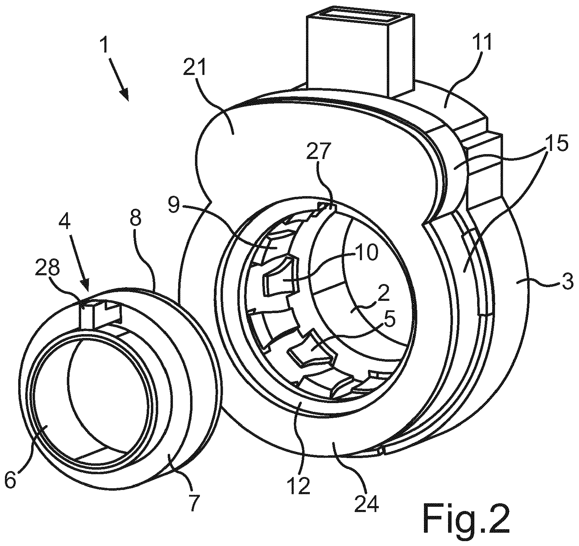

Bezug nehmend nun auf Fig. 2, welche die Sensorvorrichtung 1 in zusammengebautem Zustand zeigt, ist das Mitnehmerelement 28 in einer Ausführungsform aus dem Magnetmaterial 7 ausgeformt und steht über den äußeren Umfang des Magnetmaterials 7 radial nach außen ab. Bei der axialen Montage der Sensorvorrichtung 1 bzw. beim axialen Einschieben des Magneten 4 in das Innere des Stators 5 greift somit das Mitnehmerelement 28 in die radiale Aussparung 27 ein und wird dort axial eingeführt. Hierzu kann eine geeignete Einführschräge an der Aussparung 27 und/oder dem Mitnehmerelement 28 vorgesehen sein, wobei diese Schräge vorzugsweise beidseitig ausgebildet ist, so dass zwischen dem Mitnehmerelement 28 und dem Rotor 12 möglichst geringes Spiel in tangentialer Richtung vorhanden ist, um die Hysterese im Messsignal der Lenkwinkelsensoreinrichtung gering zu halten.

Alternativ kann das Mitnehmerelement 28 auch an der Hülse 6 des Magneten 4 ausgebildet sein. Noch alternativ kann das Mitnehmerelement 28 beim Umspritzen mit der Umspritzung 8 ausgeformt werden.

## Patentansprüche

1. Sensorvorrichtung (1) für eine ein lenkradseitiges Eingangswellenteil und ein Ausgangswellenteil aufweisende Lenkwelle eines Kraftfahrzeugs, mit einer Drehmomentsensoreinrichtung (2, 4, 5) zur Erfassung eines auf die Lenkwelle aufgebrachten Drehmoments, wobei die Drehmomentsensoreinrichtung (2, 4, 5) einen Magneten (4), der am Eingangswellenteil befestigbar ist, und einen magnetischen Stator (5) aufweist, der am Ausgangswellenteil befestigbar ist und zum Leiten von magnetischem Fluss von dem Magneten (4) hin zu einem Magnetsensor ausgebildet ist, und mit einer Lenkwinkelsensoreinrichtung (12, 14, 18) zur Erfassung eines Lenkwinkels der Lenkwelle, wobei die Lenkwinkelsensoreinrichtung (12, 14, 18) einen Rotor (12) und eine Erfassungseinrichtung (14, 18) zur Erfassung einer Drehbewegung des Rotors (12) aufweist,
**dadurch gekennzeichnet, dass**
der Rotor (12) der Lenkwinkelsensoreinrichtung (12, 14, 18) mit dem Magneten (4) drehbar gekoppelt ist und sich zusammen mit dem lenkradseitigen Eingangswellenteil dreht.

2. Sensorvorrichtung (1) nach Anspruch 1,
**dadurch gekennzeichnet, dass**
eines der Elemente Rotor (12) oder Magnet (4) eine, insbesondere radiale, Aussparung (27) aufweist und das andere Element ein Mitnehmerelement (28) aufweist, welches sich in die Aussparung (27) hinein erstreckt.

3. Sensorvorrichtung (1) nach Anspruch 2,
**dadurch gekennzeichnet, dass**
der Rotor (12) einen ringförmigen Grundkörper (25) aufweist, in welchem die Aussparung (27) ausgebildet ist, und der Magnet (4) das Mitnehmerelement (28) aufweist.

4. Sensorvorrichtung (1) nach einem der vorhergehenden Ansprüche,
**dadurch gekennzeichnet, dass**
die Erfassungseinrichtung (14, 18) ein Getriebe (14) aufweist, mittels welchem die Drehbewegung des Rotors (12) in eine Drehbewegung eines Magnetelements übertragbar ist, wobei das Getriebe (14) und das Magnetelement in einem Gehäuse (15) der Sensorvorrichtung (1) angeordnet sind, und wobei der Rotor (12) in dem Gehäuse (15) drehbar gelagert ist.

5. Lenkwellenvorrichtung für ein Kraftfahrzeug, mit einer Lenkwelle, welche ein lenkradseitiges Eingangswellenteil und ein Ausgangswellenteil aufweist, und mit einer Sensorvorrichtung (1) nach einem der vorhergehenden Ansprüche.

6. Kraftfahrzeug mit einer Lenkwellenvorrichtung nach Anspruch 5.

7. Verfahren zum Herstellen einer Lenkwellenvorrichtung für ein Kraftfahrzeug durch:
- Bereitstellen einer Lenkwelle mit einem lenkradseitigen Eingangswellenteil und einem Ausgangswellenteil,
- Bereitstellen einer Drehmomentsensoreinrichtung (2, 4, 5) mit einem Magneten (4), der am Eingangswellenteil befestigt wird, und einem magnetischen Stator (5), der am Ausgangswellenteil befestigt wird und zum Leiten von magnetischem Fluss von dem Magneten (4) hin zu einem Magnetsensor ausgebildet wird, und
- Bereitstellen einer Lenkwinkelsensoreinrichtung (12, 14, 18) mit einem Rotor (12) und einer Erfassungseinrichtung zur Erfassung eines Lenkwinkels der Lenkwelle,
**dadurch gekennzeichnet, dass**
der Rotor (12) der Lenkwinkelsensoreinrichtung (12, 14, 18) mit dem Magneten (4) drehbar gekoppelt wird und sich zusammen mit dem lenkradseitigen Eingangswellenteil dreht.

## Claims

1. Sensor device (1) for a steering shaft of a motor vehicle which has a steering-wheel-side input shaft part and an output shaft part, having a torque sensor device (2, 4, 5) for sensing a torque which is applied to the steering wheel, wherein the torque sensor device (2, 4, 5) has a magnet (4), which can be attached to the input shaft part, and a magnetic stator (5) which can be attached to the output shaft part and is designed to conduct magnetic flux from the magnet (4) to a magnet sensor, and having a steering angle sensor device (12, 14, 18) for sensing a steering angle of the steering shaft, wherein the steering angle sensor device (12, 14, 18) has a rotor (12) and a sensing device (14, 18) for sensing a rotational movement of the rotor (12),
**characterized in that**
the rotor (12) of the steering angle sensor device (12, 14, 18) can be rotatably coupled to the magnet (4) and rotates together with the steering-wheel-side input shaft part.

2. Sensor device (1) according to Claim 1,
**characterized in that**
one of the elements of the rotor (12) or magnet (4) has a, in particular radial, cutout (27), and the other element has a driver element (28) which extends into the cutout (27).

3. Sensor device (1) according to Claim 2,
**characterized in that**
the rotor (12) has an annular base body (25) in which the cutout (27) is formed, and the magnet (4) has the driver element (28).

4. Sensor device (1) according to one of the preceding claims,
**characterized in that**
the sensing device (14, 18) has a gear mechanism (14) by means of the rotational movement of the rotor (12) can be converted into a rotational movement of a magnet element, wherein the gear mechanism (14) and the magnet element are arranged in a housing (15) of the sensor device (1), and wherein the rotor (12) is rotatably mounted in the housing (15).

5. Steering shaft device for a motor vehicle, having a steering shaft which has a steering-wheel-side input shaft part and an output shaft part, and having a sensor device (1) according to one of the preceding claims.

6. Motor vehicle having a steering shaft device according to Claim 5.

7. Method for manufacturing a steering shaft device for a motor vehicle by:
- making available a steering shaft with a steering-wheel-side input shaft part and an output shaft part,
- making available a torque sensor device (2, 4, 5) having a magnet (4), which is attached to the input shaft part, and a magnetic stator (5) which is attached to the output shaft part, and is designed to conduct magnetic flux from the magnet (4) to a magnet sensor, and
- making available a steering angle sensor device (12, 14, 18) having a rotor (12) and a sensing device for sensing a steering angle of the steering shaft,
**characterized in that**
the rotor (12) of the steering angle sensor device (12, 14, 18) is rotatably coupled to the magnet (4) and rotates together with the steering-wheel-side input shaft part.

## Revendications

1. Ensemble de capteur (1) pour la colonne de direction d'un véhicule automobile, qui présente
une partie d'arbre d'entrée côté volant et une partie d'arbre de sortie,
un dispositif (2, 4, 5) de capteur de couple de rotation qui détecte un couple de rotation appliqué sur la colonne de direction, le dispositif (2, 4, 5) de capteur de couple de rotation présentant un aimant (4) qui peut être fixé sur la partie d'arbre d'entrée et un stator magnétique (5) qui peut être fixé sur la partie d'arbre de sortie et qui est configuré pour guider le flux magnétique de l'aimant (4) vers un capteur magnétique et
un dispositif (12, 14, 18) de capteur d'angle de braquage qui détecte l'angle de braquage de la colonne de direction, le dispositif (12, 14, 18) de capteur d'angle de braquage présentant un rotor (12) et un dispositif de saisie (14, 18) qui saisit un déplacement de rotation du rotor (12),
**caractérisé en ce que**
le rotor (12) du dispositif (12, 14, 18) de capteur d'angle de braquage est accouplé à rotation à l'aimant (4) et tourne en même temps que la partie d'arbre d'entrée située côté volant.

2. Ensemble de capteur (1) selon la revendication 1,
**caractérisé en ce qu'**un des éléments que sont le rotor (12) et l'aimant (4) présente une découpe (27) en particulier radiale et **en ce que** l'autre élément présente un élément d'entraînement (28) qui s'étend dans la découpe (27).

3. Ensemble de capteur (1) selon la revendication 2,
**caractérisé en ce que** le rotor (12) présente un corps de base (25) annulaire dans lequel la découpe (27) est formée et **en ce que** l'aimant (4) présente l'élément d'entraînement (28).

4. Ensemble de capteur (1) selon l'une des revendications précédentes, **caractérisé en ce que** le dispositif de saisie (14, 18) présente une transmission (14) au moyen de laquelle le déplacement de rotation du rotor (12) peut être converti en un déplacement de rotation d'un élément magnétique, la transmission (14) et l'élément magnétique étant disposés dans un boîtier (15) de l'ensemble de capteur (1) et le rotor (12) étant monté à rotation dans le boîtier (15).

5. Ensemble de colonne de direction pour véhicule automobile, présentant une colonne de direction qui présente une partie d'arbre d'entrée située côté volant et une partie d'arbre de sortie, et un ensemble de capteur (1) selon l'une des revendications précédentes.

6. Véhicule automobile doté d'un ensemble de colonne de direction selon la revendication 5.

7. Procédé de fabrication d'un ensemble de colonne de direction pour véhicule automobile par les étapes qui consistent à :
préparer une colonne de direction présentant une partie d'arbre d'entrée située côté volant et une partie d'arbre de sortie,
préparer un dispositif (2, 4, 5) de capteur de couple de rotation présentant un aimant (4) fixé sur la partie d'arbre d'entrée et un stator magnétique (5) fixé sur la partie d'arbre de sortie et configuré pour guider le flux magnétique de l'aimant (4) vers un capteur magnétique et
préparer un dispositif (12, 14, 18) de capteur d'angle de rotation présentant un rotor (12) et un dispositif de saisie qui saisit l'angle de braquage de la colonne de direction,
**caractérisé en ce que**
le rotor (12) du dispositif (12, 14, 18) de capteur d'angle de rotation est accouplé à rotation à l'aimant (4) et tourne avec la partie d'arbre d'entrée située côté volant.
